Europäisches Patentamt

European Patent Office

Office européen des brevets

(19)

(11) Numéro de publication: **0 267 074 B1**

(12)

# FASCICULE DE BREVET EUROPEEN

(45) Date de publication de fascicule du brevet:
27.11.91

(51) Int. Cl.⁵: **G02B 6/44, G02B 6/42**

(21) Numéro de dépôt: 87402191.8

(22) Date de dépôt: 02.10.87

(54) **Dispositif de protection d'un connecteur à fibre optique contre les perturbations électromagnétiques et les décharges électrostatiques.**

(30) Priorité: 22.10.86 FR 8614639

(43) Date de publication de la demande:
11.05.88 Bulletin 88/19

(45) Mention de la délivrance du brevet:
27.11.91 Bulletin 91/48

(84) Etats contractants désignés:
BE DE ES GB IT NL SE

(56) Documents cités:
EP-A- 0 191 328
DE-A- 3 335 664
US-A- 4 227 765

IBM TECHNICAL DISCLOSURE BULLETIN, vol.
9, no. 3, août 1966, pages 252,253, New York,
US; R.T. EVANS et al.: "Terminal for coaxial
cable"

IBM TECHNICAL DISCLOSURE BULLETIN, vol.
23, no. 3, août 1980, pages 877-878, New
York, US; T.A. ANZELONE, Jr. et al.:
"Discharge path for cassette module"

(73) Titulaire: **TELEMECANIQUE**
**43-45, Boulevard Franklin Roosevelt**
**F-92504 Rueil-Malmaison Cedex(FR)**

(72) Inventeur: **Malgouires, Pascal**
**14, Avenue Sainte Rosalie**
**F-06150 Cannes la Bocca(FR)**
Inventeur: **Meurlay, Alain**
**Place du 8 mai La Beilouno**
**F-06510 Carros(FR)**

(74) Mandataire: **Marquer, Francis et al**
**Cabinet Moutard 35, Avenue Victor Hugo**
**F-78960 Voisins le Bretonneux(FR)**

## Description

La présente invention se rapporte, d'une manière générale, aux connecteurs enfichables monofibre pour le couplage d'une fibre optique à un composant opto-électronique, et elle concerne plus particulièrement un dispositif assurant la protection combinée d'un tel connecteur "optique" en position enfichée, contre les perturbations électromagnétiques et les décharges électrostatiques.

Ces connecteurs sont utilisés dans de nombreux secteurs techniques et, en particulier, dans le domaine des automates programmables lesquels se composent d'une unité centrale dans laquelle le transfert des informations s'effectue par l'intermédiaire de bus qui communiquent avec l'extérieur au moyen de circuits d'entrée/sortie réalisés en un ou plusieurs modules opto-électroniques ; chaque module regroupe sur une carte de circuit imprimé les têtes optiques d'émission et de réception ainsi que l'électronique d'environnement, et chaque tête optique regroupe autour du composant opto-électronique les moyens de couplage à une fibre optique de liaison à l'aide d'un connecteur enfichable.

Dans ce secteur de la commande d'automatismes industriels, les fibres optiques de liaison habituellement utilisées sont des fibres plastiques qui sont chacune terminées par un connecteur réalisé également en matière plastique. Un tel connecteur présente cependant une certaine fragilité d'emploi et la fibre plastique introduit des pertes élevées notamment dans le cas de liaisons de grandes distances.

Afin d'améliorer les performances tant mécaniques qu'optiques de la connexion à réaliser, il convient d'utiliser un connecteur non plus plastique mais métallique, du type par exemple SMA, câblé avec une fibre de silice. Ce connecteur comporte un corps extérieur qui se termine par une fiche mâle cylindrique s'insérant axialement dans une fiche femelle cylindrique en saillie du boîtier du composant opto-électronique.

Toutefois, un tel connecteur métallique en position enfichée joue le rôle d'antenne réceptrice pour le composant et capte alors les rayonnements électromagnétiques qui viennent perturber la tête optique de réception ou d'émission ; d'autre part, les composants opto-électroniques et leurs amplificateurs associés risquent d'être perturbés ou détériorés par des décharges électrostatiques produites par l'opérateur au niveau du connecteur.

Il est connu, selon le document DE-A-33 35 664, de protéger des composants électroniques contre les perturbations électromagnétiques ou électrostatiques susceptibles d'être captées par un connecteur électrique (mâle) amovible, qui est enfichable dans une fiche femelle fixe reliée électriquement auxdits composants électroniques implantés sur une carte de circuit imprimé, au moyen d'un dispositif comprenant :

- une plaque qui s'étend perpendiculairement à la direction d'enfichage du connecteur et qui est percée d'une ouverture de passage et revêtue d'une métallisation de mise à la terre ;
- un écran métallique, également mis à la terre et qui s'étend, en regard de la face métallisée, parallèlement à la plaque ; et
- des moyens de liaison électrique reliant le corps externe du connecteur à l'écran dans sa position enfichée.

Toutefois, le problème de la protection de composants optoélectroniques est différent de celui de la protection de composants électroniques et n'a pas été résolu de façon satisfaisante dans l'art antérieur lorsque le connecteur mâle est métallique.

La présente invention a pour but d'empêcher les perturbations et détériorations susvisées et de réaliser un dispositif qui permet de protéger d'une manière très efficace les interfaces électroniques à connecteur métallique câblé avec une fibre optique, à la fois contre les parasites d'origine électromagnétique et contre les décharges électrostatiques.

L'invention a donc pour objet un ensemble de couplage d'au moins un composant opto-électronique avec au moins une fibre optique au moyen d'un connecteur optique, enfichable de manière amovible, dont le corps est réalisé en un matériau électriquement conducteur et se termine par une fiche mâle cylindrique montée en extrémité de ladite fibre optique, ledit ensemble comprenant :

- un coffret contenant une carte de circuit imprimé sur laquelle est implanté au moins un composant opto-électronique monté dans un boîtier, la paroi dudit coffret située en regard dudit composant étant constituée par une plaque, qui s'étend perpendiculairement à la direction d'enfichage du connecteur et qui est percée d'une ouverture de passage de l'extrémité d'enfichage du connecteur, et ledit boîtier du composant opto-électronique comportant du côté de la plaque une fiche femelle cylindrique faisant saillie au travers de ladite ouverture de façon à recevoir la fiche mâle cylindrique du connecteur ; et
- un dispositif de protection dudit composant opto-électronique contre les perturbations électromagnétiques et les décharges électrostatiques susceptibles d'être captées par le connecteur, ledit dispositif comprenant :
  - une métallisation de mise à la terre recouvrant la face interne de la plaque ainsi que le pourtour interne de l'ouverture de cette plaque,

- un écran métallique qui est relié au zéro volt du circuit électrique comprenant le composant opto-électronique et qui présente une paroi frontale s'étendant parallèlement à la plaque, en regard de la face interne métallisée de celle-ci, et qui est percée d'un orifice de passage de la fiche du boîtier du composant, coaxialement aligné avec l'ouverture ménagé dans la plaque,

- un manchon isolant de recouvrement du connecteur, qui se termine par une collerette venant à proximité de la face externe de la plaque lors de l'enfichage du connecteur, et

- des moyens de liaison électrique reliant élastiquement le corps du connecteur en position enfichée à l'écran métallique.

Selon une autre caractéristique de l'invention, les moyens de liaison électrique élastique comportent :

- une bague annulaire métallique qui est interposée entre l'écran et la face arrière de la plaqué, la bague présentant une face dite avant tournée vers l'écran et une face dite arrière contre laquelle est en appui le connecteur en position enfichée, la bague étant recouverte par un joint torique isolant et l'ensemble bague-joint débouchant en face arrière au niveau de l'ouverture ménagée dans la plaque et étant susceptible d'être légèrement poussé en direction de l'écran sous l'action d'un effort de pression exercé par le connecteur lors de son enfichage ;

- un ressort métallique de rappel de l'ensemble bague-joint qui est en contact par l'une de ses extrémités avec la face avant de la bague et en contact par son autre extrémité avec l'écran.

D'autres caractéristiques et avantages de l'invention apparaîtront mieux dans la description détaillée qui suit et se réfère aux dessins annexés donnés uniquement à titre d'exemple et dans lesquels :

La figure 1 représente une vue en perspective éclatée du dispositif de protection selon l'invention ; et

La figure 2 représente une vue en coupe longitudinale du dispositif de protection ainsi que du connecteur en position enfichée.

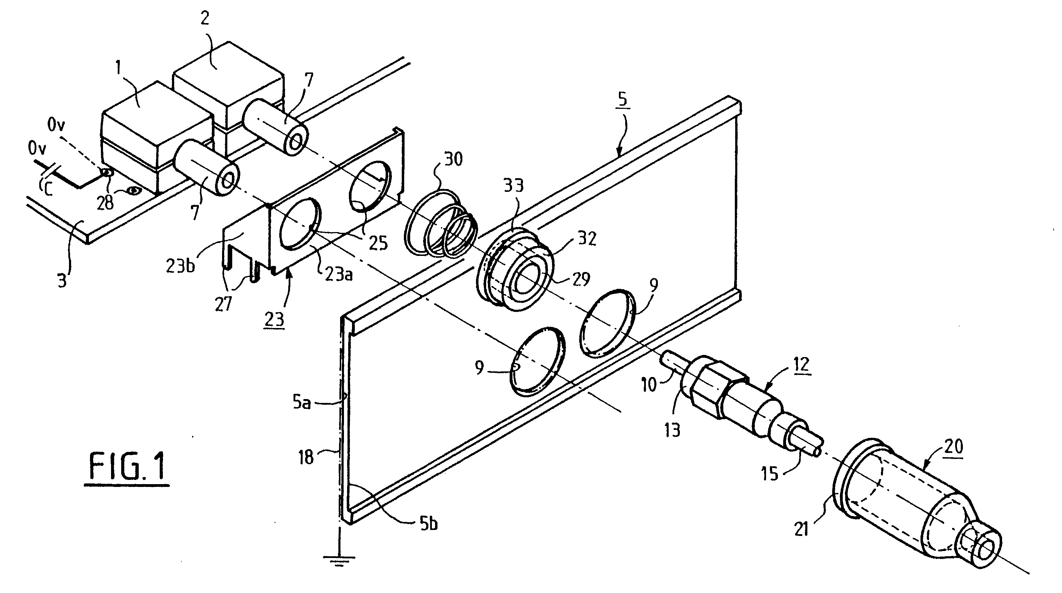

Sur la figure 1, on a représenté en 1 et 2 deux boîtiers de composants opto-électroniques, l'un d'émission et l'autre de réception, qui sont implantés côte à côte sur l'un des bords d'une carte de circuit imprimé 3 laquelle est destinée à réaliser par exemple un circuit de liaison série entre des automates programmables.

La carte 3 équipée de ses composants est logée dans un coffret modulaire (non figuré) de forme parallélépipédique dont la face avant est fermée par une plaque rectangulaire 5 en matière plastique en regard de laquelle sont placés les deux boîtiers de composants opto-électroniques 1, 2 portés par la carte.

Comme le montre la figure 1, chacun des deux boîtiers de composants 1, 2 comporte en face avant une fiche "optique" femelle cylindrique 7 faisant saillie de la carte 3 et destinée à recevoir axialement via une ouverture circulaire 9 ménagée dans la plaque 5 une fiche "optique" mâle 10, de forme cylindrique, prévue sur un connecteur monofibre désigné par le repère général 12.

Chaque connecteur enfichable 12, dont un seul est visible sur la figure 1, est réalisé en un matériau conducteur et comporte un corps extérieur en métal 13 qui est monté en extrémité d'une fibre optique de liaison 15, en silice, et qui se termine par la fiche "optique" mâle 10. Le connecteur métallique 12 est par exemple un connecteur type SMA, connu en soi, qui assure le couplage de la fibre optique au composant opto-électronique en venant se fixer par vissage sur le boîtier dudit composant.

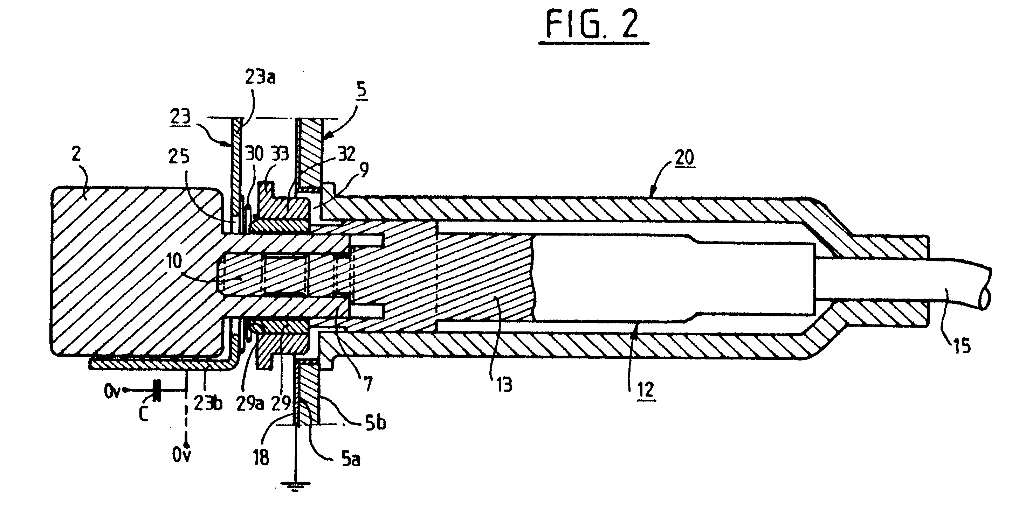

En référence aux figures 1 et 2, on va maintenant décrire les moyens conformes à l'invention qui permettent de protéger le connecteur "optique" 12 en position enfichée (figure 2) contre les parasites électromagnétiques et les décharges électrostatiques.

En premier lieu, la plaque perforée 5 constituant la façade avant du coffret de logement de la carte de circuit imprimé est revêtue sur toute sa face avant 5a tournée vers le composant d'une métallisation 18 de mise à la terre, le pourtour interne de chaque ouverture de passage 9 étant également métallisé. Cette métallisation 18, par exemple de zinc, est réalisée suivant la technique connue sous le nom de shoopage.

D'autre part, le connecteur câblé 12 est recouvert d'un manchon isolant 20 qui se termine par une collerette 21 venant à proximité de la face arrière 5b de la plaque 5 lors de l'enfichage du connecteur suivant une direction perpendiculaire à ladite plaque.

Ainsi, lorsqu'un opérateur produit des décharges électrostatiques au niveau du connecteur en position enfichée, celles-ci sont écoulées vers la terre par la métallisation 18, de sorte que la transmission optique ne s'en trouve ni perturbée ni détériorée.

Suivant une caractéristique de l'invention, un écran métallique commun 23 est monté d'équerre sur la carte de circuit imprimé 3 et est relié électriquement, d'une part, au 0 volt du circuit électrique, soit directement, soit via une capacité C d'isolement galvanique et, d'autre part, au connecteur "optique" 12 en position enfichée par l'intermédiaire d'une liaison mécanique souple.

L'écran métallique 23, figure 1, est réalisé par exemple en acier zingué et présente une forme de U qui s'étend devant les deux boîtiers 1, 2 et latéralement à ceux-ci. L'écran 23 comprend une paroi frontale 23a parallèle à la plaque 5, à distance de celle-ci, et percée d'orifices circulaires 25 coaxialement alignés avec les ouvertures 9 ménagées dans la plaque, chaque orifice 25 étant traversé par la fiche "optique" femelle correspondante 7 lors du montage de l'écran sur la carte de circuit imprimé.

L'écran 23 comporte également deux parois latérales 23b, dont une seule est visible sur la figure 1, dotées chacune de deux pattes de fixation 27 venant en engagement dans des trous métallisés 28 prévus dans la carte de circuit imprimé ; comme le montre la figure 1, l'un des trous 28 est relié électriquement au 0 volt du circuit électrique, soit directement comme figuré en pointillés, soit par l'intermédiaire de la capacité C.

Entre chaque paire d'ouvertures coaxiales 9, 25 ménagées l'une dans la plaque 5 et l'autre dans l'écran 23, est interposé coaxialement un système mécanique composé d'une bague annulaire métallique 29 et d'un ressort métallique de rappel 30.

Comme il apparaît sur la figure 2, la bague métallique 29, par exemple en acier inoxydable, est montée avec un léger jeu autour de la fiche "optique" 7 du boîtier du composant correspondant, par exemple le boîtier 2, et est guidée axialement sur ladite fiche en étant sollicitée de façon classique par le ressort de rappel 30, de manière à être susceptible d'une légère course axiale vers l'écran 23 sous l'action d'un effort de pression exercé par le connecteur lors de son enfichage. Le ressort métallique 30, par exemple en acier inoxydable, est constitué par un fil élastique enroulé en hélice dont l'une des extrémités est en contact avec la face avant 29a de la bague 29 et dont l'autre extrémité est en contact avec l'écran 23 (figure 2).

La bague 29 est d'autre part revêtue d'un joint torique isolant 32, de diamètre légèrement inférieur à celui de l'ouverture 9, qui se termine en face avant par une collerette 33 destinée à venir en butée contre la plaque 5 au cours du mouvement de rappel produit par le ressort 30 lors du retrait du connecteur.

Comme le montre la figure 2, le connecteur 12 en position enfichée prend appui contre la bague métallique 29 laquelle constitue avec le ressort métallique 30 une liaison conductrice avec l'écran 23 porté au potentiel zéro.

Ainsi, lors de la réception de parasites électromagnétiques captés par le connecteur, ceux-ci sont dirigés vers le 0 volt du circuit soit directement, soit via la capacité en empruntant le chemin conducteur constitué par le corps proprement dit du connecteur 12, la bague 29, le ressort 30 et l'écran 23, de sorte que les informations à transmettre ne s'en trouvent pas dégradées.

Bien entendu, l'invention n'est nullement limitée au mode de réalisation décrit et représenté et comprend tous les équivalents techniques des moyens décrits ainsi que leurs combinaisons si celles-ci sont effectuées suivant l'esprit de l'invention et mises en oeuvre dans le cadre des revendications qui suivent.

**Revendications**

1. Ensemble de couplage d'au moins un composant optoélectronique avec au moins une fibre optique (15) au moyen d'un connecteur optique, enfichable de manière amovible, dont le corps (12) est réalisé en un matériau électriquement conducteur et se termine par une fiche mâle cylindrique (10) montée en extrémité de ladite fibre optique, ledit ensemble comprenant :

   - un coffret contenant une carte de circuit imprimé (3) sur laquelle est implanté au moins un composant opto-électronique monté dans un boîtier (1, 2), la paroi dudit coffret située en regard dudit composant (1, 2) étant constituée par une plaque (5), qui s'étend perpendiculairement à la direction d'enfichage du connecteur et qui est percée d'une ouverture (9) de passage de l'extrémité d'enfichage du connecteur, et ledit boîtier (1, 2) du composant optoélectronique comportant du côté de la plaque (5) une fiche femelle (7) cylindrique faisant saillie au travers de ladite ouverture (9) de façon à recevoir la fiche mâle cylindrique (10) du connecteur ; et

   - un dispositif de protection dudit composant opto-électronique contre les perturbations électromagnétiques et les décharges électrostatiques susceptibles d'être captées par le connecteur, ledit dispositif comprenant :
     - une métallisation (18) de mise à la terre recouvrant la face interne de la plaque (5) ainsi que le pourtour interne de l'ouverture (9) de cette plaque (5),
     - un écran métallique (23) qui est relié au zéro volt du circuit électrique comprenant le composant opto-électronique et qui présente une paroi frontale s'étendant parallèlement à la plaque (5), en regard de la face interne mé-

ᴀ

tallisée (5a) de celle-ci, et qui est percée d'un orifice (25) de passage de la fiche (7) du boîtier (1, 2) du composant, coaxialement aligné avec l'ouverture (9) ménagé dans la plaque (5),

- un manchon (20) isolant de recouvrement du connecteur, qui se termine par une collerette venant à proximité de la face externe (5b) de la plaque (5) lors de l'enfichage du connecteur, et

- des moyens de liaison électrique (29, 30) reliant élastiquement le corps (12) du connecteur en position enfichée à l'écran métallique (23).

2. Dispositif selon la revendication 1, caractérisé en ce que les moyens de liaison électrique élastique comportent :

- une bague annulaire métallique (29) qui est placée autour de la fiche du boîtier du composant et qui est interposée entre l'écran (23) et la face arrière (5b) de la plaque, la bague présentant une face dite avant tournée vers l'écran et une face dite arrière contre laquelle est en appui le corps (10) du connecteur en position enfichée, la bague étant recouverte par un joint torique isolant (32) et l'ensemble bague-joint débouchant en face arrière au niveau de l'ouverture (9) ménagée dans la plaque (5) et étant susceptible d'être légèrement poussé en direction de l'écran sous l'action d'un effort de pression exercé par le corps du connecteur lors de son enfichage ;

- un ressort métallique (30) de rappel de l'ensemble baguejoint qui est en contact par l'une de ses extrémités avec la face avant de la bague (29) et en contact par son autre extrémité avec l'écran (23).

3. Dispositif selon la revendication 2, caractérisé en ce que le joint torique (32) présente en face avant une collerette (33) destinée à venir en butée sur la face avant métallisée de la plaque (5) au cours du mouvement de rappel de l'ensemble bague-joint produit par le ressort (30) lors du retrait du corps du connecteur.

4. Dispositif selon l'une des revendications 1 à 3, caractérisé en ce que l'écran métallique (23) est relié au zéro volt du circuit comprenant le composant opto-électronique via une capacité (C).

**Claims**

1. A coupling assembly for coupling at least one optoelectronic component to at least one optical fiber (15) by means of an optical connector, which is removably pluggable, and the body (12) of which is formed from an electrically conducting material and ends in a male cylindrical plug (10) mounted at the end of said optical fiber, said assembly comprising :

- a box having a printed circuit card (3) on which is implanted at least one optoelectronic component lodged in a case (1,2), the wall of said box situated opposite said component (1,2) being formed by a plate (5), which extends perpendicularly to the direction in which the connector is plugged and which is pierced with an aperture (9) for the passage of the plugging-in end of the connector, and said case (1,2) of the optoelectronic component having on the side of plate (5) a female cylindrical plug (7) projecting through said aperture (9) so as to receive the male cylindrical plug (10) of the connector ; and

- a protective device for said optoelectronic component against electromagnetic disturbances and electrostatic discharges which may be picked up by the connector, said device comprising :

. a metal grounding layer (18) covering the internal face of plate (5) as well as the internal periphery of aperture (9) of the plate (5) thereof ;

. a metal screen (23) which is connected to the zero volt of the electric circuit including the optoelectronic component and which presents a front face extending parallel to plate (5), opposite the metallized internal face (5a) thereof, and which is pierced with an aperture (25) for the passage of the socket (7) of the case (1,2) of the component, aligned coaxially with aperture (9) provided in plate (5) ;

. an insulating sleeve (20) covering the connector, which ends in a collar situated close to the external face (5b) of the plate (5) during plugging-in of the connector, and

. electrical connecting means (29,30) resiliently connecting the body (12) of the connector in the plugged-in position to the metal screen (23).

2. Device according to claim 1, characterized in that the resilient electrical connecting means comprise :

- an annular metal ring (29) which is situated at the periphery of the socket of the component and which is interposed between screen (23) and the rear face (5b) of the plate, the ring having a so-called front face turned towards the screen and a so-called rear face against which the body (10) of the connector abuts in the plugged-in position, the ring being covered by an insulating O seal (32) and the ring-seal assembly emerging on the rear face at the level of aperture (9) provided on plate (5) and being able to be pushed slightly in the direction of the screen under the effect of a pressure force exerted by the body of the connector during plugging-in thereof ;
- a metal return spring (30) for the ring-seal assembly which is in contact by one of its ends with the front face of the ring (29) and in contact by its other end with the screen (23).

3. Device according to claim 2,
characterized in that the O seal (32) has on the front face thereof a collar (33) intended to come into abutment against the front metalized face of plate (5) during the return movement of the ring-seal assembly produced by spring (30) during withdrawal of the body of the connector.

4. Device according to one of the claims 1 to 3,
characterized in that the metal screen (23) is connected to the zero volt of the circuit comprising the optoelectronic component via a capacitor (C).

## Patentansprüche

1. Kuppelvorrichtung für mindestens ein optoelektronisches Bauteil mit mindestens einer optischen Faser (15) durch einen einsteck- und ausziehbaren optischen Verbinder, dessen Körper (12) aus einem elektrisch leitenden Material ist und der in einem zylindrischen, am Ende der besagten optischen Faser angeordneten, Stecker (10) endet, wobei besagte Vorrichtung aufweist :
- einen Schaltkasten, mit einer gedruckten Leiterkarte (3), auf der mindestens ein, in einem Gehäuse (1, 2) untergebrachtes, optoelektronisches Bauteil angeordnet ist und die dem besagten Bauteil (1, 2) gegenüberliegende Wand dieses Kastens eine Platte ist, welche sich senkrecht zur Einsteckrichtung des Verbinders erstreckt und eine Durchgangsöffnung (9) für das Einsteckende des Verbinders aufweist, und besagtes Gehäuse (1, 2) des optoelektronischen Bauteils auf der Seite der Platte (5) eine zylindrische Steckdose (7) aufweist, welche durch besagte Öffnung (9) reicht, um den zylindrischen Stecker (10) des Verbinders aufzunehmen ; und
- eine Schutzvorrichtung für besagtes optoelektronisches Bauteil gegen elektromagnetische Störungen und elektrostatische Entladungen,welche der Verbinder auffangen kann, wobei besagte Vorrichtung aufweist :
  . eine Metallbedampfung (18) zur Erdung, welche die Innenseite der Platte (5) bedeckt, sowie den inneren Umfang der Öffnung (9) dieser Platte (5) ;
  . einen Metallschirm (23), der an die Nullspannung des elektrischen Schaltkreises angeschlossen ist, welcher den optoelektronischen Bauteil enthält und der eine Vorderfläche aufweist, welche sich parallel zur Platte (5), gegenüber deren metallbedampfter Innenfläche (5a) erstreckt, und der eine Durchlassöffnung (25) für den Stecker (7) des Gehäuses (1, 2) des Bauteils aufweist, welche koaxial zu der in der Platte (5) angebrachten Öffnung (9) ausgerichtet ist ;
  . eine Isolierhülse (20), welche den Verbinder bedeckt und in einem Flansch endet, der sich, wenn der Verbinder eingesteckt ist, in der Nähe der Aussenfläche (5b) der Platte (5) befindet ; und
  . Mittel (29, 30) zur elektrischen Verbindung, die in der eingesteckten Position den Körper (12) des Verbinders elastisch mit dem Metallschirm (23) verbinden.

2. Vorrichtung nach Anspruch 1,
dadurch gekennzeichnet, dass die Mittel zur elastischen elektrischen Verbindung aufweisen :

- eine ringförmige Metallscheibe (29), welche um den Gehäusestecker des Bauteils herum und zwischen dem Schirm (23) und der Hinterseite (5b) der Platte angeordnet ist, Wobei die Scheibe eine sogenannte, dem Schirm zugewandte, Vorderfläche aufweist und eine sogenannte Hinterseite, gegen die der Körper (10) des Verbinders in der eingesteckten Stellung anliegt, wobei die Scheibe von einem Isolierdichtring (32) bedeckt ist und die ScheibenDichtringeinheit in der hinteren Fläche, in Höhe der in der Platte (5) angebrachten Öffnung (9) zum Vorschein kommt und, unter der Wirkung eines vom Verbindungskörper beim Einstecken ausgeübten Drucks, leicht in Richtung des schirms verschoben werden kann ;

- eine Metallfeder (30) zur Rückstellung der ScheibenDichtringeinheit, welche durch eines ihrer Enden mit der Vorderseite der Scheibe (29) Kontakt hat und durch das andere Ende mit dem Schirm (23).

3. Vorrichtung nach Anspruch 2, dadurch gekennzeichnet, dass der Dichtring (32) auf der Vorderseite einen Flansch (33) aufweist, der, im Laufe der von der Feder (30) beim Herausziehen des Verbindungskörpers bewirkten Rückstellbewegung der Scheiben-Dichtringeinheit, gegen die metallbedampfte Vorderseite der Platte (5) zum Anschlag kommt.

4. Vorrichtung nach einem der Ansprüche 1 bis 3, dadurch gekennzeichnet, dass der Metallschirm (23) durch ein C-Glied (C) an die Nullspannung des Schaltkreises, welcher das optoelektronische Bauteil enthält, angeschlossen ist.

**FIG.1**

EP 0 267 074 B1

FIG. 2